# EUROPEAN PATENT SPECIFICATION

(11) **EP 4 438 453 B1**
(45) Date of publication and mention of the grant of the patent: **13.05.2026**
(21) Application number: 23382309.5
(22) Date of filing: 30.03.2023
(51) Int. Cl.: B62K 25/28, F16F 9/54

(54) **SYSTEM AND METHOD FOR MODIFYING THE GEOMETRY OF A BICYCLE**
SYSTEM UND VERFAHREN ZUR MODIFIZIERUNG DER GEOMETRIE EINES FAHRRADS
SYSTÈME ET PROCÉDÉ DE MODIFICATION DE LA GÉOMÉTRIE D'UNE BICYCLETTE

(43) Date of publication of application: 02.10.2024
(73) Proprietor: ORBEA, S. COOP., 48269 Mallabia (BIZKAIA) (ES)
(72) Inventor: ESCARIHUELA ALCOVERRO, Arnau, 48006 Bilbao (ES)
(74) Representative: Cueto, Sénida

(56) References cited:
- CN-A- 115 675 703
- DE-A1- 102015 106 905
- US-A1- 2011 227 312
- US-A1- 2013 214 507
- US-A1- 2019 308 688
- US-B1- 6 877 591
- IGNACIO CACHARR�N: "�Qu� son los Flip Chips? C�mo tener dos bicis en una", 2 February 2021 (2021-02-02), pages 1 - 10, XP093078899, Retrieved from the Internet <URL:https://solobici.es/que-son-los-flip-chips-como-tener-dos-bicis-en-una/> [retrieved on 20230905]

## Description

### Field of the invention

The present invention belongs to the field of bicycles, and particularly to the field of systems designed for modifying the geometry of a double suspension bicycle, commonly known as "flip chip" systems.

A first object of the present invention is a novel system for modifying the geometry of a double suspension bicycle without the need to disassemble completely any connection of the rear suspension system.

A second object of the invention is a method for modifying the geometry of a double suspension bicycle using the system disclosed above.

### State of the art

The geometry of a bicycle refers to the different angles and distances between the elements forming said bicycle. The geometry of a bicycle has a direct impact in the behaviour of the bicycle during use, directly affecting the manoeuvrability, stability, user position, as well as many other variables. Depending on the geometry, a bicycle can be focused towards a good pedalling efficiency and climbing performance or, on the other hand, focused towards improving the behaviour in technical downhill. For that reason, there are different bicycle models having different geometries depending on the intended use. Merely as an example, in the field of mountain bikes there are three main types: XC, All mountain and Enduro.

In recent years, a system known as "flip chip" intended to change the geometry and the kinematics of the rear suspension mechanism in double suspension mountain bicycle has been developed. A double suspension bicycle is characterized by comprising a rear suspension mechanism allowing the rear wheel to move with respect to the main frame, also known as front triangle, in a controlled manner. There exist a number of rear suspension mechanism, but they all have in common the provision of a number of articulations intended to allow the aforementioned movement of the rear wheel that, naturally, is dampened by a damper.

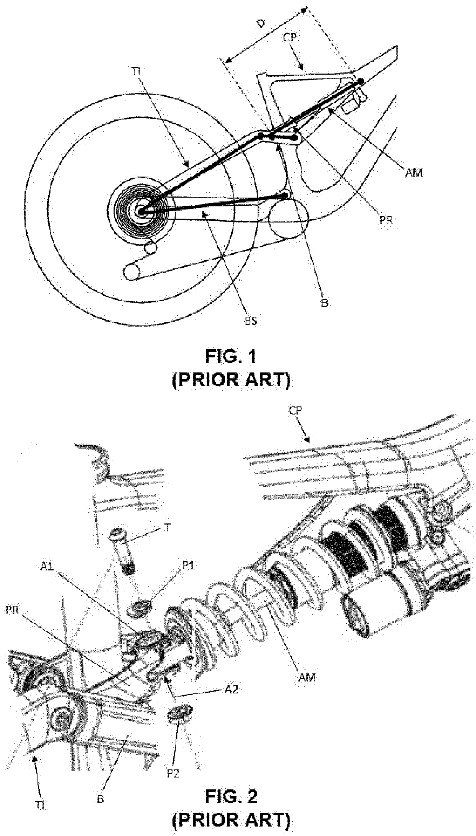

Fig. 1 shows a particular example of a bicycle having a rear suspension system where the different elements making up the suspension mechanism enabling the controlled movement of the rear wheel are illustrated. In this particular case, the system comprises a deformable polygon comprising bases (BS) articulated to an end of the main frame (CP) and, at the other end, braces (TI) that, in turn, have an opposite end connected to an articulated linkage (B). The opposite end of the articulated linkage (B) is articulated to the main frame (CP). To this deformable polygon a dyad (or secondary mechanism) is added whose main components are a prolonger (PR) having an end articulated to a intermediate position of the articulated linkage (B) and a opposite end connected to an and of the damper (AM). Finally, the opposite end of the damper (AM) is articulated to the main frame (CP). Thanks to this configuration, the rear suspension mechanism allows the rear wheel to move up or down depending on the irregularities of the ground and also on the inertia caused by the movement of the cyclist while pedalling, the movement capacity being controlled by the stiffness of the damper (AM).

The "flip chip" system allows for modifying the position of a connection of the rear suspension mechanism, thus impacting the geometry of the bicycle as a whole and, therefore, it allows for changing the bicycle behaviour during use. Particularly, a flip chip system installed in the connection between the damper (AM) and the prolonger (PR) is briefly disclosed here. This flip chip system allows for the modification of the distance D shown in Fig. 1 which, in turn, affects the rest of the geometrical parameters of the bicycle that determine its behaviour. It is important to point out that the figures only show an exemplary configuration of this type of systems, since the flip chip system could be installed in other positions of the rear suspension system.

Fig. 2 shows in more detail a flip chip system installed in the bicycle illustrated in Fig. 1. Specifically, the image of Fig. 2 corresponds to the flip chip system of an Orbea model Rallon 2022 bicycle. Fig. 2 shows in greated detail how the damper (AM) is connected to the prolonger (PR) which, in turn, is connected to the articulated linkage (B). The connection between the rear end of the articulated linkage (B) and the brace (TI) making up the uppermost element of the rear triangle is also shown.

In this context, the flip chip system is formed by the following elements:
1. Two respectively upper and lower chips (P1, P2) having a washer-like shape (these are the parts commonly known as flip chips in this field)
2. Two sockets (A1, A2) provided at the front end of the prolonger (PR) for receiving the chips (P1, P2).
3. A screw (T) passing through the first chip (P1) housed in the upper socket (A1) of the prolonger (PR), an end orifice of the bar making up the plunger of the damper (AM), and the second chip (P2) housed in the lower socket (A2) of the prolonger (PR). The screw (T) is screwed in a thread provided at the orifice of the lower chip (P2) to fix the assembly.

The chips (P1, P2) have a particular shape that can only be housed inside the sockets (A1, A2) in two predefined orientations. Thereto, the chips (P1, P2) usually have plan shape that is symmetric with respect to a plane, such that they only fit inside the respective socket (A1, A2) in the two cited positions (for example, an approximately rectangular shape having rounded edges). In a first orientation, the orifice of the chips (P1, P2) through which the screw (T) passes is placed in a first predetermined position with respect to the prolonger (PR). In a second orientation, the orifice of the chips (P1, P2) is placed in a second predetermined position with respect to the prolonger (PR).

Therefore, depending on the orientation of the chips (P1, P2) when installed in the respective sockets (A1, A2), the effective position of the connection between the prolonger (PR) and the damper (AM) is modified a small distance. This distance varies from one bicycle model to another, although it normally amounts to several millimetres. Thus, in the particular case shown in Fig. 2, the length (D) of the assembly formed by the damper (AM) and the prolonger (PR) is modified, and this change in length causes a modification of the geometry of the bicycle altering its behaviour when in use.

The use of the flip chip system is generally known in this field, such that several bicycle brands have models having this system. However, since each suspension system has a particular configuration, the solutions developed by each brand are slightly different, particularly with respect to the connection where the system is provided. In any case, the general mode of operation and the components making up the system are the same in all cases: two chips, two sockets placed in a particular element of the rear suspension system, and a screw fixing the assembly. Depending on the orientation of the chips when installed, the position of the screw when the system is mounted changes, and this change in the position of the connection causes a modification in the geometry of the bicycle.

To more clearly understand the operation of this system, there are a number of internet pages disclosing the flip chip system that include photographs and schematic drawings. Only as an example, reference can be made to web page https://solobici.es/que-son-los-flip-chips-como-tener-dos-bicis-en-una/.

Since the characteristics of a conventional flip chip system are known, there is no need to provide further details in connection with its operation.

The main drawback of the flip chip systems currently used is related to the relative technical difficulty involved when changing the orientation of the chips.

Indeed, changing the orientation of the chips requires completely dismounting the connection where the flip chip system is provided, such that an end of at least one of the bars making up the connection is completely loose. For example, in the case shown in Fig. 2, it is necessary to disconnect the rear end of the damper bar (AM). That is, it is necessary to completely unscrew the screw (T), completely extract the chips (P1, P2), re-introduce them in their respective sockets (A1, A) with the new orientation (normally, after a 180° rotation), and finally introduce the screw (T) again to fix the assembly together. The following video shows in a detailed manner how this change is carried out: https://www.youtube.com/watch?v=vLZ55Z-KByo.

The difficulty of handling these small parts in a small space, in a situation in the mountain where the cyclist may use gloves, and commonly using multitools, a tool that is not the most comfortable for carrying out the change, causes the configuration of the bicycle is usually only changed at the garage or at home, and virtually never during a route.

According to all of the above, there is a need in this field for geometry change systems allowing for the change to be carried out in a simpler manner.

Document US6877591B1 discloses a crank of a shock absorber for a bicycle having a rotatable micro-adjusting rod for altering the angle of the shock absorber relative to the bicycle frame.

### Brief description of the invention

The inventors of the present invention have developed a new flip chip system design allowing for changing the configuration of the bicycle without the need to dismount the connection completely. In particular, the geometry change system of the present invention is formed mainly by the same elements of a conventional flip chip system: chips, sockets where the chips fit, and screw fixing the assembly together. However, the chips and the sockets have a novel structure allowing for changing the position of the chips without the need to completely extract the screw, but only to only loosen it. Thereto, the chips can be displaced from a position to the other while abutting against the walls of the sockets which guide the displacement in a cam-like manner.

This new configuration of the flip chip system allows for the users to modify the configuration of the bicycle in a simpler manner, thereby facilitating changes while in a route more frequently.

In the present documents, terms such as "front", "rear", "up", "down", and the like are interpreted, unless the context clearly indicates otherwise, with reference to the natural position and orientation of the bicycle.

### Geometry change system

A first aspect of the present invention is directed to a system for changing the geometry of a bicycle for modifying the position of a connection of the rear suspension mechanism. As disclosed above in the present document, modifying the position of the connection causes a change in the geometry of the bicycle as a whole that alters its behaviour during use. In the present context, it is important to note that the connection of the rear suspension mechanism where this system is implemented can be different depending on each application, the only relevant aspect being the possibility of changing the position of said connection.

The system of the invention mainly comprises the following elements: chips; components making up the connection; and screw fixing the assembly together. Now, each of these elements is disclosed in greater detail.
a) Chips
   There are two chips, specifically a first and a second chip, each of which comprises an orifice. It is normally a circular orifice designed to receive the connection screw that, in the case of the second chip, further comprises a thread for threading the screw.
   As disclosed below in the present document, the chips of the present invention carry out mainly the same function as the usually referred to in the present field as "flip chips" with the added feature that, thanks to an exclusive design, they do not need to be completely extracted from the screw to move from a position to the other.
b) First component
   The first component of the rear suspension mechanism has an fork-shaped end. This configuration means that said component, in the end that joins the second component disclosed hereinbelow, is divided into two arms designed to receive an end of the second component between them.
   Each arm of the fork respectively comprises a first and a second sockets configured to receive a corresponding chip. In the present context, the sockets refers to a recessed portion of the surface of the arm of the fork whose shape is designed to allow a chip to fit therein at least in two different positions. Furthermore, as is known in this field, said first and second sockets are provided on external faces of the arms of the fork and comprise each a through hole. Naturally, in both positions of the chip, the circular orifice of said chip is aligned with the hole of the socket, which therefore is bigger and normally has a non-circular shape. Thus, when the chip is housed inside the corresponding socket, it is possible to make the screw pass successively through the orifice of the chip and the hole of the socket, the screw thereby passing through both arms of the aforementioned fork to enable the connection with the second component.
c) Second component
   The second component of the rear suspension mechanism has an end comprising a connection hole with the first component. This end is configured to be inserted between the arms of the fork of the first component to make up the aforementioned connection.
d) Screw
   The screw is configured to pass through the orifice of the first chip, the hole of the first socket, the hole of the second component, the hole of the second socket, and thread into the orifice of the second chip.

As mentioned above, the chips are configured to fit inside the sockets of the first component alternatively in at least two different positions. Each position corresponds to a different location of the orifices of the chips with respect to the first component. Therefore, the location of the screw fixing the connection is different depending on the position of the chips, thereby modifying the position of the connection.

The features disclosed until this point are known in conventional flip chips systems in this field. However, the system of the present invention differs from them in that the socket and the chip are designed to allow the chip to change position without the need to be completely extracted from the socket. Thereto:
- Each socket comprises a cavity delimited by walls provided around the hole of said socket. Naturally, there exist a certain distance between the walls and the edges of the hole, such that a flat platform on which the chip will rest exists between both elements.
- Each chip comprises a body where the orifice is provided, said body having a shape configured to fit inside said cavity of the socket in such a way that it alternates between said at least two positions by sliding against the walls without exiting the cavity.

In other words, in the prior art the shape of the socket corresponded exactly to the shape of the chip. Since the shape of the chip was not circular, the chip fitted inside said socket only in certain very specific positions. For example, the most common case was a chip having a shape symmetric with respect to a plane that fitted inside the socket only in two specific positions (for example, an essentially rectangular shape with rounded edges). Once introduced in one of said positions, the chip was snugly fitted inside the socket and it was not possible to bring it to another position if not by extracting it completely from the socket which, as mentioned above, implied the complete extraction of the screw.

On the contrary, in the present invention the socket has a cavity configured to receive the body, but that cavity no longer has exactly the same shape as the body but it is configured in a cam-like manner to allow the body, and therefore the chip as a whole, to be displaced by sliding against the walls defining said cavity without the need to extract it. The cavity, therefore, is laterally defined by walls having smooth curves allowing for the body to be rotated, displaced, or else caused to follow a combined movement of rotation and translation to move from a position to the other. That is, the body, when housed inside the cavity, rests on the flat platform formed between the walls of the cavity and the edges of the hole of the socket, and it rotates while at all times resting on said flat platform. In this context, the number of possible positions is not limited; the cavity and the body can be designed for the chip to adopt two, three, four or even more different positions.

As mentioned above, this configuration allows for changing the position of the chips without the need to extract the screw completely, thereby allowing the cyclist to make the change in a simpler and faster manner.

In principle, the cavity and the body could have any shape allowing for the disclosed function to be carried out. However, in a particularly preferred embodiment of the invention, the body has an elongated shape and the cavity as a heart-like shape comprising two lobes protruding in two directions forming an angle. Therefore, the body fits alternatively in one or the other lobe respectively in a high position or in a low position, and the walls of the cavity are configured for guiding the body between the high position and the low position following a combined movement of rotation and translation. Furthermore, when the body reaches the high position or the low position, the walls of the cavity make up a stop that prevents the body to move further from said position.

Even more preferably, the body is essentially rectangular having semi-circular shape ends and the orifice is provided near one of the ends, and each lobe of the cavity of the socket of the first component has an essentially semi-circular shape.

In this context, the terms "high position" and "low position" correspond to the usual terminology used in conventional flip chip systems. These denominations are connected with the geometrical configuration of the bicycle in each case. The high position corresponds to a configuration focused on improving the performance when pedalling and climbing, with more vertical direction and seat angles. The low position, on the contrary, is focused on improving the performance when going downhill.

In another preferred embodiment of the invention, the lobes of the cavity comprise a high lobe and a low lobe. The high lobe is that housing the body of the chip when in the so-called high position, while the low lobe is that housing the body of the chip when in the so-called low position. Now, the lobes are configured in such a way that the angular difference of the body between the high position and the low position is smaller than 90°.This feature can be achieved, for example, making one of the lobes have a length smaller than the length of the body, as disclosed in greater detail below in the present document.

Even more preferably, the axis of the lobes of the cavity form 90°. Since the angular difference of the body between the high and low positions is smaller than 90° this implies that, in the low position, the body is aligned with the axis of the low lobe while, in the high position, the body is not aligned with the axis of the high lobe. For example, the angular difference of the body between the high position and the low position can be between 55° and 80°, more preferably between 60° and 70°.

This configuration is advantageous because it allows for the body to move from the high position to the low position simply by applying weight to the rear wheel.

Indeed, as mentioned above, when weight is applied on the rear wheel, the tension in the connection where the system of the invention is provided causes the chips to move towards the low position. If the angular difference of the body between the high and low positions was 90° or greater, the body would tend to be "blocked" in the high position. That is, to move from the high position to the low position, once the screw is loosened, it would be necessary to manually actuate the chips first to make them go through the first part of their trajectory until arriving at a particular position where, once forming less than 90°, only the application of weight on the rear wheel would cause the displacement along the second part of their trajectory.

On the contrary, since the angular difference of the body between the high and low positions is smaller than 90°, the simple application of weight on the rear wheel causes the body to slide against the walls of the cavity from the high position to the low position. To change position between the low position to the high position no such blockage possibility exists, and therefore the axis of the chip does align with the axis of the lobe in the low position.

According to still one more preferred embodiment of the invention, each chip further comprises a protrusion that is perpendicular to a plane parallel to the body that extends at least partially an interior wall of the orifice of the chip. Thus, when the body is housed inside the cavity of the socket, the protrusion passes through the hole of said socket. Furthermore, the shape of the hole of the socket is configured in such a way that the protrusion slides against the edges of said hole during the movement of the chip between the high position and the low position.

That is, on the side of the chip where, during normal use, rests on the socket, a protrusion projects that passes through the hole of said socket. This protrusion is advantageous in view of a double function. On one side, by having an inner surface that extend the inner wall of the orifice of the chip, it provides a longer support for the screw, thereby ensuring a better distribution of the load. On the other hand, it functions as an additional guide element when the chip alternates between the high position and the low position, since it slides against the edges of the hole. Indeed, when the chip moves from one position to another, both the body (against the lateral walls of the cavity) and the protrusion (against the edges of the hole of the socket) slide until arriving at the destination position. In the destination position, also both elements, body and protrusion, move until encountering a stop made respectively by the walls of the cavity and the edges of the hole of the socket.

The protrusion may be configured in a number of manners provided it is suitable for carrying out the functions disclosed above. For example, according to a preferred embodiment of the invention, the protrusion has a circular inner wall forming part of an inner surface of the orifice of the chip and an outer wall also circular. The inner wall provides support to the screw when the system is assembled, while the outer wall slides against the edges of the hole of the socket when the chip moves. Therefore, in this preferred embodiment the shape of this protrusion is similar to a half-moon.

Even more preferably, the hole of the socket has the same shape as the cavity of said socket. For example, in the embodiment where the shape of the cavity has two lobes forming a particular angle, the hole would have the same shape but with a smaller size. Therefore, between the walls delimiting the cavity and the hole a flat platform having an essentially uniform width there is a platform on which the body rests when the chip is housed inside the socket. The description provided above regarding the shape of the cavity is, *mutatis mutandi,* also applicable to the shape of the hole.

In still another preferred embodiment of the invention, the chip further comprises a protection plate provided on a side of the body opposite to that where the protrusion is provided. This protection plate projects radially with respect to the body in such a way that, when the chip is fitted inside the socket, said protection plate covers an upper edge of the walls of the cavity with the purpose of preventing the introduction of debris.

The protection plate may in principle have any shape provided it is sufficiently wide as to cover the walls defining the cavity in all positions of the chip, although preferably it has an aesthetically nice shape, since it would be the visible part of the chip when the system is installed. For example, the protection plate may have an approximately square shape with rounded edges.

In another preferred embodiment of the invention, the chip further comprises an indicator configured to provide the user with a visual indication regarding the orientation of the body. In principle, the indicator may adopt a number of configurations, such as e.g. a notch, a rib, or any other element allowing the user to know the position of the body. Note that the body is covered by the protection plate and, therefore, it is not possible to visually observe its position. The indicator may also be embodied as a shape of the protection plate from which the position of the body can be clearly derived. For example, in a particularly preferred embodiment, the indicator is a tooth protruding radially from the protection plate to provide the user with a visual indication as to the orientation of the body.

In this context, note that it is important that the chip reaches completely the high position, that is, it is important to prevent the chip from staying at a position between the high position and the low position. Indeed, as mentioned above, the weight of the cyclist on the rear wheel when mounted on the bicycle will cause tensions that will bias the chip towards the low position. The shape of the cavity and the body of the chip are designed to ensure that, when the chip is in the high position, the friction generated by the tightened screw plus the friction between the body and the wall of the cavity is enough to securely maintain the chip in said high position. However, if the position does not reach the high position completely, staying at a "halfway" position, then the friction between the body and the wall of the cavity could be insufficient and, when subjected to a high tension, the chip could disadvantageously slide to the low position.

According to still one more preferred embodiment of the invention, the socket further comprises a projection provided in the trajectory of the tooth when the chip reaches the high position. This projection is still one more stop element (along with the walls of the cavity and the edges of the hole of the socket) preventing the chip from rotating further than the high position and further signalling the user that the high position is reached.

The present invention is further directed to a bicycle comprising a geometry change system according to any of the previous paragraphs.

### Method for changing the geometry

A second aspect of the present invention is directed to a method for changing the geometry of a bicycle carried out by a system as disclosed in the previous paragraphs.

The method mainly comprises the following steps:
- Loosening the screw without extracting it completely.
- Moving the chips from the initial position to the desired position, that is, between the high position and the low position, by causing the body to slide against the walls of the cavity without extracting the chips from their respective sockets.
- Tightening the screw again.

### Brief description of the figures

The details of the invention are shown in the attached drawings, which do not limit the scope of the invention:
Fig. 1 illustrates an exemplary bicycle showing an exemplary placement of a flip chip system according to the prior art.
Fig. 2 shows the flip chip system in the bicycle of Fig. 1 according to the prior art in greater detail.
Fig. 3 shows a perspective exploded view of the geometry change system according to the present invention.
Figs. 4a and 4b show to perspective views of a chip of the geometry change system according to the present invention.
Fig. 5 shows a perspective view of the socket provided in the first component of the geometry change system according to the present invention.
Figs. 6a and 6b show respective upper views of a geometry change system according to the present invention respectively in the high position and the low position.
Figs. 7-7c show in greater detail cross-sections of the geometry change system according to the present invention respectively in the low position, the intermediate position and the high position.

### Detailed description of the invention

A particular example of a geometry change system (1) according to the present invention is now described with reference to the attached drawings. The configuration disclosed in this section is merely an example, since the geometry change system (1) disclosed in the present document could be implemented in a number of connections of a bicycle.

The system (1) of the present invention is designed for modifying the total length of an assembly formed by a first component (3) and a second component (4). The first component (3) is called "prolonger", included in bicycles having a structure similar to that of the commercial model Orbea Rallon 2022 shown in Fig. 2. The second component (4) is the damper of the bicycle.

As shown, the first component (3) has an essentially double-fork shape. At a first end there is a fork comprising two arms (39) that, when installed, allow for the seat bar to pass through (as shown in Fig. 2). At the opposite end there is another fork that is rotated 90° with respect to the first fork and that is smaller in size. This second fork is configured to receive between its arms (31) an end of the second component (4) that is provided with a connection hole (41) with the first component (3). The arms (31) of the fork of the first component (3) also have respective holes (33). Thereby, when the end of the second component (4) is sandwiched between the two arms (31) of the fork of the first component (3), the holes (33) of the arms (31) of the fork of the first component (3) and the hole (41) of the end of the second component (4) are aligned in a direction that, in the natural position of the bicycle, is essentially vertical.

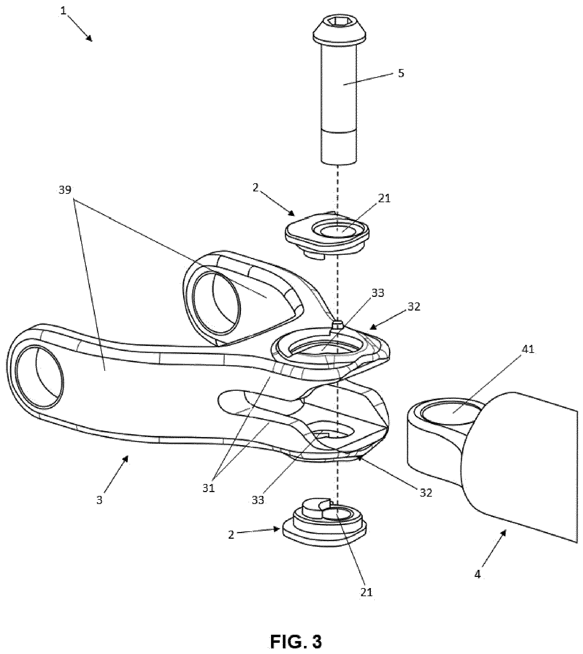

The connection system (1) of the present example is implemented mainly by means of three elements clearly shown in Fig. 3: sockets (32) respectively provided on the outer surfaces of the arms (31) of the fork of the first component (3); chips (2) configured to be inserted in said sockets (21) of the chips (2); and a screw (5) configured to pass through the orifices (21) of the chips (2), the holes (33) provided inside the sockets (32), and the hole (41) of the second component. The chips (2) in this example may adopt two different positions, called "high position" and "low position", and the features of the sockets (32) and the chips (2) are designed to prevent the need to extract the screw (5) completely to move from one position to another.

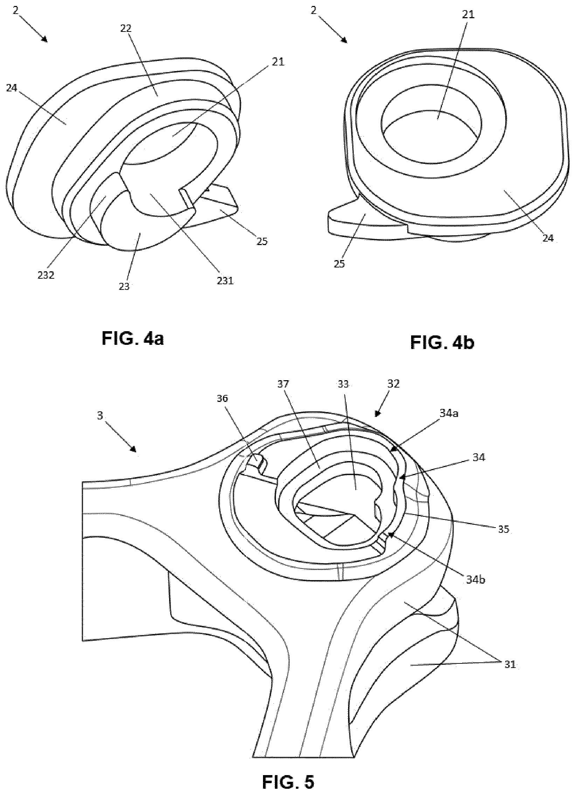

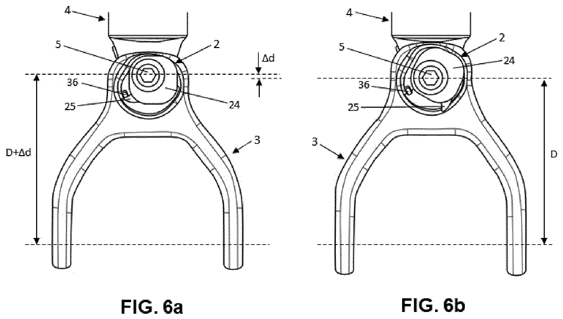

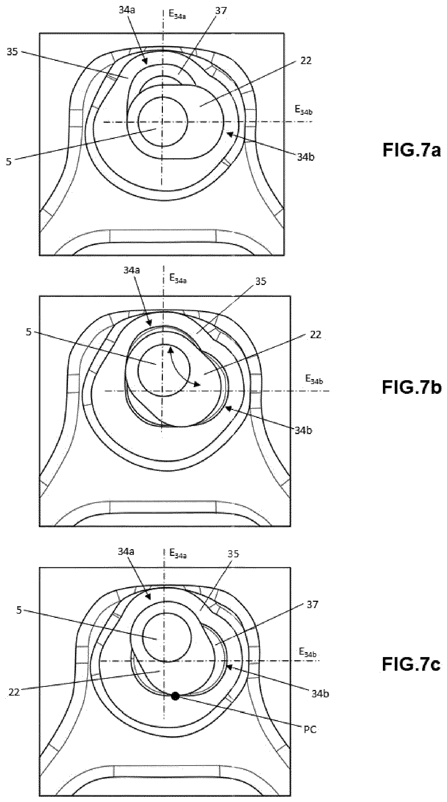

More specifically, each chip (2) in this example is formed essentially by two parts having particular functions, each of them interacts with a corresponding feature of socket (32). Naturally, although these parts are disclosed individually herein, normally the chip (2) is formed in a single piece.
**Body (22) / cavity (34)**
   As shown in Figs. 4a and 4b, each chip (2) comprises an essentially rectangular body (22) having two circular ends. That is, the body (22) is shaped as an essentially flat plate having a central portion with straight parallel walls and two end portions with semicylindrical walls. A circular orifice (21) passes through one end of the body (22) in a direction perpendicular to the main plane of the plate making up said body (22), the orifice (21) being provided at a concentric position with respect to the semicircle making up said end.
   During use of the system (1) of the present invention, the body (22) of the chip (2) is housed inside a cavity (34) of the socket (32). As shown in Fig. 5, the cavity (34) is defined by walls (35) protruding perpendicularly to the surface of the arm (31) of the first component (3) where the socket (32) is provided. Said walls (35) are provided around the hole (33) of said socket (32) and separated therefrom. Thus, between the edges of the hole (33) and the walls (35) there is a platform (37) on which the body (22) rests. Additionally, in this example the platform (37) is recessed with respect to the surface of the arm (31) of the first component (3) where the socket (32) is provided.
   With respect to the shape of the cavity (34), it is selected for the body (22) to alternate between the high position and the low position without the need to extract it completely, but only sliding against the walls (35). Although, as mentioned earlier in the present document, this effect could be attained in a number of manners, a particular example is disclosed here where the cavity (34) has essentially the shape of a heart formed by two lobes respectively high (34a) and low (34b) protruding in two directions forming 90° between them. The shape of each of the lobes (34a, 34b) is complementary with the shape of the body (22), and the walls (35) of the cavity (34) are rounded where corresponding to allow the body (22) to move between the high lobe (34a) and the low lobe (34b) without being extracted: in the low position, a rounded end of the body (22) is received inside the low lobe (34b); and in the high position, the opposite rounded end of the body (22) is received inside the high lobe (34a).
   This configuration can clearly be seen in Figs. 7a-7c. As shown, the axis (E₃₄ₐ, E_{34b}) of the high (34a) and low (34b) lobes form 90° between them. However, the cavity (34) and the body (22) have a shape and size designed in such a way that the angular trajectory of the body (22) between the high and low positions is not 90° but somewhat smaller, approximately 65° in this particular example. Thereto, the length of the high lobe (34a) is a litter smaller than the length of the low lobe (34b). That is, the low lobe (34b) has essentially the same length as the body (22) such that, in the low position shown in Fig. 7a, the body (22) is completely housed inside the low lobe (34b). In this position, the main axis of the body (22) (not explicitly shown in the figures) is parallel to the axis (E_{34b}) of the low lobe (34b), and therefore at least one whole lateral wall of the body (22) and one of the circular ends thereof are completely in contact with the walls (35) defining the low lobe (34b). On the contrary, a length of the high lobe (34a) is somewhat smaller than the length of the body (22) such that, in the high position, the body (22) isn't housed completely inside the high lobe (34a). That is, in the high position the main axis of the body (22) does not reach a position where it is aligned with the axis (E₃₄ₐ) of the high lobe (34a), as shown in Fig. 7c. Therefore, in this case the length of the walls of the body (22) in contact with the walls (35) defining the high lobe (34a) is smaller than in the previous position. Specifically, only the rounded end of the body (22) entering said high lobe (34a) and a contact point (PC) of the opposite end are in contact with said walls (35)
   As mentioned above, the reason for this configuration is to facilitate the movement of the chip (2) from the high position to the low position only by applying weight on the rear wheel. Indeed, it is easy to see that, in case the body (22), in the high position, was completely housed inside the high lobe (34a), its main axis would be vertical. In that case, when applying weight on the rear wheel to cause the chip (2) to move from the high position to the low position a tension would appear that, according to the orientation of Fig. 7c, would be directed vertically downwards, that is, in a direction perpendicular to the inferior portion of wall (35) defining cavity (34). The body (22) would be "blocked" and it would not by itself start the translation and rotation movement taking it towards the low position. In this situation, a small manual push would be necessary to aid in the beginning of the movement.
   On the contrary, with the configuration shown in these figures, the main axis of the body (22) forms a smaller angle with the lower portion of the wall (35) defining the cavity (34), in this example an angle of 65°. Therefore, the body (22) is no longer "blocked" and it is possible to start the movement in a simpler manner just by applying weight on the rear wheel.
   Figs. 7a-7c also shown the screw (5) housed inside the orifice (21) of the body (22). As shown, when the body (22) moves between the high and low positions, the orifice (21) also moves and, consequently, so does the screw (5) joining the components (3, 4). In conclusion, thanks to this system the position of the connection between the first component (3) and the second component (4) is modified.
**Protrusion (23) / Hole (33)**
   In the context of the above disclosure, it is obvious that the hole (33) must have a size large enough to encompass the two possible positions of the orifice (21) of the chip (2), respectively the high position and the low position. In principle, this is the only condition the hole (33) must necessarily meet. However, in the present example a protrusion (23) is provided in the chip (2), and the hole (33) is designed in a particular manner to cooperate with said protrusion (23).
   Indeed, in the present example the chip (2) has a protrusion (23) projection from an area of the surface of the body (22) that rests against the platform (37) making up the bottom of the cavity (34). Specifically, the protrusion (23) is a plate having essentially a half moon shape. An inner wall (231) of the half moon shape is cylindrical and constitutes a continuation of the inner cylindrical surface of the orifice (21) of the chip (2), and an outer wall (232) of the half moon shape is also essentially cylindrical and it is positioned concentrically with respect to the semicircle making up the end of the body (22).
   On the other hand, the hole (33) of the socket (32) has in this example a shape that is essentially the same as the shape of the cavity (34). That is, the hole (33) has a heart-like shape having two circular lobes that protrude forming a 90° angle. The size of the hole (33) is somewhat smaller than the size of the cavity (34), and therefore the platform (37) provided between the edges of the hole (33) and the walls (35) defining the cavity (34) has an essentially uniform thickness along its perimeter.
   Thanks to this configuration, when the body (22) of the chip (2) is housed inside the cavity (34) and rests on the platform (37), the protrusion (34) projects through the hole (33). The protrusion (23) fits inside the respective lobes of the hole (33) when the chip (2) is respectively in the high and low positions, and it slides along the edges of said hole (33) during the movement from one position to the other. When the chip (2) arrives at the high position, the protrusion (23) fits inside one of the lobes of the hole (33), and when the chip (2) reaches the low position, the protrusion (23) fits in the other lobe of the hole (33).
   As mentioned earlier in the present document, a first function of the protrusion (23) is that, by its inner wall (231) prolonging the inner surface of the orifice (21) of the chip (2), the screw (5) is supported in a larger surface that, in turn, allows for a better distribution of the tensions produced during use. Furthermore, by the protrusion (23) sliding along the edges of the hole (33) when the chip (2) moves from one position to the other, and by being fitted inside one or the other lobe of said hole (33) in the final positions of the chip (2), the protrusion (23) is not only an additional guide feature but also an additional stop feature when the chip (2) reaches said high and low positions.
**Protection plate (24) / walls (35)**
   The chip (2) further comprises a protection plate (24) that is provided in the surface of the body (22) opposite to that resting on the platform (37) making up the bottom of the cavity (34). The surface of this protection plate (24) is considerably larger than the surface of the body (22), and it is configured to cover the upper edge of the walls (35) defining the cavity (34) when the chip (2) is inside the socket (32) with the body (22) resting on said platform (37).
   In principle, the protection plate (24) could have any shape provided it covers said walls (35) in all the positions adopted by the chip (2) throughout its displacement between the high position and the low position. For example, in the present example the protection plate (24) has an essentially square shape with rounded edges. The protection plate (24) prevents debris and dirt from entering the cavity (34), since this could be an inconvenience impeding a smooth displacement of the body (22) between the high position and the low position.
**Tooth (25) / projection (36)**
   Due to the protection plate (24) the user, when using the system (1) of the invention to change the geometry of the bicycle, cannot see if the body (22) has reached the high or low position. That is particularly relevant in the case of the high position since, as explainer earlier in the present document, it is an unstable position from which the body (22) tends to move due to the charges applied on the rear wheel. For this reason, it is particularly important for the chip (2) to reach the high position since it has been verified that in the high position the friction generated between the rounded end of the body (22) housed inside the high lobe (34a) and the contact point (PC) of the opposite end with the portion of wall (35) provided below according to the orientation of Fig. 7c is enough to ensure that the chip (2) stays in the high position. On the contrary, if the body (22) does not reach the high position (as shown, for example, in Fig. 7b), the contact at the rounded end of the body (22) housed in the high lobe (34a) is lost and, additionally, the angle formed by the main axis of the body (22) and the axis of the low lobe (34b) is reduced. The combined effect of these two issues causes a reduction in the force necessary to make the chip (2) move towards the low position, which is a risky situation.
   For these reasons, to ensure that the user displaces the chip (2) completely to the high position, the chip (2) in the present example additionally has a tooth (25) projecting radially from the protection plate (24). The tooth (25) provides a visual indication to the user as to the position of the body (22), and particularly signals the user if the high position has or has not been reached.
   In this example, the socket (32) further has a projection (36) protruding above the wall (35) defining the cavity (34). In this example, the wall (35) of the cavity (34) does not surround the hole (33) completely, but it is interrupted in a section. This section makes up the trajectory of the tooth (35) that, correspondingly, has a larger thickness than that of the protection plate (24). That is, the tooth (35) not only protrudes radially from the protection plate (24), but also from at least par of the thickness of the body (22). In this context, an alternative configuration where the wall (35) surrounded completely the hole (33) would also be possible, in which case the tooth (25) would have exactly the same thickness as the protection plate (24) and, like said protection plate (24), it would move above the upper edge of the wall (35).
   In any case, when the chip (2) moves from the high position to the low position, the tooth (25) moves along said section and the user knows the chip (2) has arrived at the high position when said tooth (25) is adjacent the projection (36). Figs. 6a and 6b clearly show the function of the tooth (25) and the projection (36).

In conclusion, thanks to this configuration of the system (1) of the present invention, the user can change the geometry of the bicycle without the need to extract the screw (5) completely. Indeed, let's suppose the chip (2) is in the low position. In this position, as shown in Fig. 7a, the body (22) is housed completely inside the low lobe (34b) of the cavity (34). In this position, also the protrusion (23) is housed in the end of the corresponding low lobe of the hole (33). Both elements, body (22) and protrusion (23), are in contact respectively with wall (35) and with the edges of the hole (33), thereby impeding any displacement of the body (22) further than the low position. As shown in Fig. 6a, the protection plate (24) covers the walls (35) defining the cavity (34), and the tooth (25) is in the side of its trajectory opposite to that where the projection (36) is located. The screw (5) passes through the orifice (21) of a chip (2), the hole (33) of the socket (32) where said chip (2) is placed, the hole (41) of the second component (4), the hole (33) of the socket (32) where the other chip (2) is placed, and finally the hole (21) of the other chip (2). As mentioned above, the orifice (21) of the second chip (2) has an inner thread, such that the screw (5) is tightened and fixes the assembly together. As shown in Fig. 6a, with the connection between the first component (3) and the second component (4) in that position, the effective length of the first component (3) is D.

Starting from this position, the user desires to change the geometry of the bicycle to the high position. Thereto, first of all he/she loosens the screw (5) without completely extracting it from the orifice (21) of the second chip (2). Next, holding the bicycle in such a way as to support the weight on the rear axle to eliminate the tensions on the chip (2), the chip (2) is manually moved from the low position to the high position (for example, merely by pulling the frame upwards at the same time the rear wheel is held tight). During the rotation, the body (22) slides against the walls (35) of the cavity (34), and the user sees the magnitude of the rotation thanks to the tooth (25). When the tooth (25) has arrived at a position adjacent the projection (36), as shown in Fig. 6b, the user knows that the body (22) has moved until a position where it is completely housed inside the high lobe (34a), as shown in Fig. 7c. The user then tightens the screw (5) again until the assembly is fixed together again. The bicycle is thereby configured with the geometry corresponding to the high position. As shown in Fig. 6b, with the connection between the first component (3) and the second component (4) in this position, the effective length of the first component (3) is now D+Δd.

Going from the high position to the low position is even simpler. Once the screw (5) is loosened, and thanks to the exclusive configuration of the cavity (34) and the body(22) of this exemplary system, the user needs only to apply weight on the rear axle of the bicycle. The body (22) slides autonomously until arriving at the low position shown in Fig. 7a, and the user needs only to tighten the screw (5) again.

## Claims

1. System (1) for changing the geometry of a bicycle by modifying the position of a connection of a rear suspension mechanism, comprising:
first and second chips (2) each having an orifice (21);
a first component (3) of the rear suspension mechanism that comprises a fork-like end, each arm (31) of the fork comprising a socket (32) configured to receive a corresponding chip (3), the first arm of the fork comprising the first socket, the second arm of the fork comprising the second socket, where said first and second sockets (32) each comprise a hole (33);
a second component (4) of the rear suspension mechanism having an end comprising a connection hole (41), and
a screw (5) configured to pass through the orifice (21) of the first chip (2),efthe hole (33) of the first socket (32), the connection hole (41) of the second component (4), the hole (33) of the second socket (32), and thread into the orifice (21) of the second chip (2),
where the chips (2) are configured to fit into the sockets (32) of the first component (3) alternatively in at least two different positions, where each position corresponds to a different position of the orifices (21) of the chips (2) with respect to the first component (3),
each socket (32) of the first component (3) comprises a cavity (34) defined by walls (35) provided around the hole (33) of said socket (32), **characterized in that**
each chip (2) comprises a body (22) where the orifice (21) is provided, where each body (22) has a shape configured to fit into said cavity (34) of the respective socket (32) such that it alternates between said at least two positions by sliding against the walls (35) without exiting the cavity (34),
where each cavity (34) does not have the same shape as the respective body (22) but it is configured in a cam-like manner with the walls (35) having smooth curves, said walls (35) thereby causing each body (22) to follow a translation or a combined movement of rotation and translation upon said body (22) moving from one position to another.

2. System (1) for changing the geometry of a bicycle according to claim 1, where each body (22) has an elongated shape and each the cavity (34) has a heart-like shape comprising two lobes (34a, 34b) that protrude in two directions forming an angle, such that each body (22) fits alternatively in one or the other lobe (34a, 34b) respectively in a high position or in a low position, where the walls (35) of each cavity (34) are configured to guide the bodies (22) between the high position and the low position following a trajectory combining rotation and translation.

3. System (1) for changing the geometry of a bicycle according to claim 2, where each body (22) is essentially rectangular with semi-circular ends and the orifice (21) is provided near one of said ends, and each lobe (34a, 34b) of the cavity (34) of the socket (32) of the first component (3) has an essentially semi-circular shape.

4. System (1) for changing the geometry of a bicycle according to claim 3, where the lobes (34a, 34b) of each cavity (34) comprise a high lobe (34a) and a low lobe (34b), where said lobes (34a, 34b) are configured such that an angular difference of the bodies (22) between the high position and the low position is smaller than 90°.

5. System (1) for changing the geometry of a bicycle according to claim 4, where the angular difference of each body (22) between the high position and the low position is between 55° and 80°.

6. System (1) for changing the geometry of a bicycle according to any of claims 4-5, where the axes (E₃₄ₐ, E_{34b}) of the lobes (34a, 34b) of each cavity (34) form 90°, such that, in the low position, the bodies (22) are aligned with the axis (E_{34b}) of the low lobe (34b) while, in the high position, the bodies (22) are not aligned with the axis (E₃₄ₐ) of the high lobe (34a).

7. System (1) for changing the geometry of a bicycle according to any of the previous claims, where each chip (2) further comprises a protrusion (23) perpendicular to a plane parallel to the body (22) that extends at least partially an inner wall of the orifice (21) of the chip (2), such that, when the body (22) is housed inside the cavity (34) of the socket (32), the protrusion (23) passes through the hole (33) of said socket (32), and where the shape of the hole (33) is configured in such a way that the protrusion (23) slides against the edges of said hole (33) when the chip moves between the high position and the low position.

8. System (1) for changing the geometry of a bicycle according to claim 7, where the protrusion (23) has a circular inner wall (231) forming part of an inner surface of the orifice (21) of the chip (2) and an also circular outer wall (232).

9. System (1) for changing the geometry of a bicycle according to any of claims 7-8, where the hole (33) of each socket (32) has essentially the same shape as the cavity (34) of said socket (32).

10. System (1) for changing the geometry of a bicycle according to any of the previous claims, where each chip (2) further comprises a protection plate (24) provided at a side of the body (22) opposite to that where the protrusion (23) is provided, where the protection plate (24) protrudes radially with respect to the body (22) such that, when the chip (2) is fitted in the socket (32), said protection plate (24) covers an upper edge of the walls (35) of the cavity (34) with the purpose of preventing the entrance of debris.

11. System (1) for changing the geometry of a bicycle according to claim 10, where each chip (2) further comprises an indicator element configured to provide the user with a visual indication as to the orientation of the body (22).

12. System (1) for changing the geometry of a bicycle according to claim 11, where each indicator element is a tooth (25) protruding radially from the protection plate (24).

13. System (1) for changing the geometry of a bicycle according to claim 12, where each socket (32) further comprises at least a projection (36) provided in the trajectory of the tooth (25) when the chip (2) reaches the high position.

14. Bicycle comprising a geometry change system (1) according to any of the preceding claims.

15. Method for changing the geometry of a bicycle carried out by a system (1) according to any of claims 1-13, **characterized by** comprising the following steps:
- loosening the screw (5) without extracting it completely;
- moving the chips (2) from the initial position to the desired position by causing each the body (22) to slide against the walls (35) of the cavity (34) without extracting the chips (2) from their respective sockets (32); and
- tightening the screw (5) again.

## Patentansprüche

1. System (1) zur Änderung der Geometrie eines Fahrrads durch Verändern der Position eines Anschlusses eines hinteren Aufhängungsmechanismus, welches Folgendes umfasst:
erste und zweite Chips (2), die jeweils eine Öffnung (21) aufweisen;
ein erstes Bauteil (3) des hinteren Aufhängungsmechanismus, das ein gabelartiges Ende umfasst, wobei jeder Arm (31) der Gabel eine Fassung (32) umfasst, die so konfiguriert ist, dass sie einen entsprechenden Chip (3) aufnimmt, wobei der erste Arm der Gabel die erste Fassung umfasst und der zweite Arm der Gabel die zweite Fassung umfasst,
wobei die erste und die zweite Fassung (32) jeweils ein Loch (33) umfassen;
ein zweites Bauteil (4) des hinteren Aufhängungsmechanismus mit einem Ende, das ein Verbindungsloch (41) aufweist, und
eine Schraube (5), die so konfiguriert ist, dass sie durch die Öffnung (21) des ersten Chips (2), das Loch (33) der ersten Fassung (32), das Verbindungsloch (41) des zweiten Bauteils (4), das Loch (33) der zweiten Fassung (32) und in die Öffnung (21) des zweiten Chips (2) geschraubt werden kann,
wobei die Chips (2) so konfiguriert sind, dass sie in die Fassungen (32) des ersten Bauteils (3) abwechselnd in mindestens zwei verschiedenen Positionen passen, wobei jede Position einer anderen Position der Öffnungen (21) der Chips (2) in Bezug auf das erste Bauteil (3) entspricht,
jede Fassung (32) des ersten Bauteils (3) einen Hohlraum (34) umfasst, der durch Wände (35) definiert ist, die um das Loch (33) der Fassung (32) herum vorgesehen sind, **dadurch gekennzeichnet, dass**
jeder Chip (2) einen Körper (22) umfasst, in dem die Öffnung (21) vorgesehen ist, wobei jeder Körper (22) eine Form hat, die so gestaltet ist, dass er in den Hohlraum (34) der jeweiligen Fassung (32) passt, so dass er zwischen den mindestens zwei Positionen wechselt, indem er gegen die Wände (35) gleitet, ohne den Hohlraum (34) zu verlassen,
wobei jeder Hohlraum (34) nicht die gleiche Form wie der jeweilige Körper (22) hat, sondern nockenartig konfiguriert ist, wobei die Wände (35) glatte Kurven aufweisen, wobei die Wände (35) dadurch bewirken, dass jeder Körper (22) einer Translation oder einer kombinierten Bewegung aus Rotation und Translation folgt, und sich der Körper (22) von einer Position zu einer anderen bewegt.

2. System (1) zur Änderung der Geometrie eines Fahrrads nach Anspruch 1, wobei jeder Körper (22) eine längliche Form und jeder Hohlraum (34) eine herzförmige Form aufweist, die zwei Nockenvorsprünge (34a, 34b) umfasst, die in zwei einen Winkel bildende Richtungen vorstehen, so dass jeder Körper (22) abwechselnd in den einen oder den anderen Nockenvorsprung (34a, 34b) jeweils in einer oberen Position oder in einer unteren Position passt, wobei die Wände (35) jedes Hohlraums (34) so konfiguriert sind, dass sie die Körper (22) zwischen der oberen Position und der unteren Position gemäß einer Trajektorie führen, die Rotation und Translation kombiniert.

3. System (1) zur Änderung der Geometrie eines Fahrrads nach Anspruch 2, wobei jeder Körper (22) im Wesentlichen rechteckig mit halbkreisförmigen Enden ist und die Öffnung (21) in der Nähe eines der Enden vorgesehen ist, und jeder Nockenvorsprung (34a, 34b) des Hohlraums (34) der Fassung (32) des ersten Bauteils (3) eine im Wesentlichen halbkreisförmige Form aufweist.

4. System (1) zur Änderung der Geometrie eines Fahrrads nach Anspruch 3, wobei die Nockenvorsprünge (34a, 34b) jedes Hohlraums (34) einen oberen Nockenvorsprung (34a) und einen unteren Nockenvorsprung (34b) umfassen, wobei die Nockenvorsprünge (34a, 34b) so gestaltet sind, dass eine Winkeldifferenz der Körper (22) zwischen der oberen Position und der unteren Position weniger als 90° beträgt.

5. System (1) zur Änderung der Geometrie eines Fahrrads nach Anspruch 4, wobei die Winkeldifferenz jedes Körpers (22) zwischen der oberen Position und der unteren Position zwischen 55° und 80° beträgt.

6. System (1) zur Änderung der Geometrie eines Fahrrads nach einem der Ansprüche 4 bis 5, wobei die Achsen (E₃₄ₐ, E_{34b}) der Nockenvorsprünge (34a, 34b) jedes Hohlraums (34) einen Winkel von 90° bilden, so dass die Körper (22) in der unteren Position mit der Achse (E_{34b}) des unteren Nockenvorsprungs (34b) ausgerichtet sind, während die Körper (22) in der oberen Position nicht mit der Achse (E₃₄ₐ) des oberen Nockenvorsprungs (34a) ausgerichtet sind.

7. System (1) zur Änderung der Geometrie eines Fahrrads nach einem der vorhergehenden Ansprüche, wobei jeder Chip (2) ferner einen Vorsprung (23) senkrecht zu einer Ebene parallel zum Körper (22) umfasst, der sich zumindest teilweise über eine Innenwand der Öffnung (21) des Chips (2) erstreckt, so dass, wenn der Körper (22) im Inneren des Hohlraums (34) der Fassung (32) untergebracht ist, der Vorsprung (23) durch das Loch (33) der Fassung (32) verläuft, und wobei die Form des Lochs (33) so gestaltet ist, dass der Vorsprung (23) gegen die Ränder des Lochs (33) gleitet, wenn sich der Chip zwischen der oberen und der unteren Position bewegt.

8. System (1) zur Änderung der Geometrie eines Fahrrads nach Anspruch 7, wobei der Vorsprung (23) eine kreisförmige Innenwand (231), die einen Teil einer Innenfläche der Öffnung (21) des Chips (2) bildet, und eine ebenfalls kreisförmige Außenwand (232) aufweist.

9. System (1) zur Änderung der Geometrie eines Fahrrads nach einem der Ansprüche 7 bis 8, wobei das Loch (33) jeder Fassung (32) im Wesentlichen die gleiche Form wie der Hohlraum (34) der Fassung (32) aufweist.

10. System (1) zur Änderung der Geometrie eines Fahrrads nach einem der vorhergehenden Ansprüche, wobei jeder Chip (2) ferner eine Schutzplatte (24) umfasst, die an einer Seite des Körpers (22) vorgesehen ist, die derjenigen, an welcher der Vorsprung (23) vorgesehen ist, gegenüberliegt, wobei die Schutzplatte (24) in Bezug auf den Körper (22) radial vorsteht, so dass, wenn der Chip (2) in die Fassung (32) eingesetzt ist, die Schutzplatte (24) einen oberen Rand der Wände (35) des Hohlraums (34) abdeckt, um das Eindringen von Ablagerungen zu verhindern.

11. System (1) zur Änderung der Geometrie eines Fahrrads nach Anspruch 10, wobei jeder Chip (2) ferner ein Anzeigeelement umfasst, das so konfiguriert ist, dass es dem Benutzer eine visuelle Anzeige der Ausrichtung des Körpers (22) liefert.

12. System (1) zur Änderung der Geometrie eines Fahrrads nach Anspruch 11, wobei jedes Anzeigeelement ein Zahn (25) ist, der radial aus der Schutzplatte (24) herausragt.

13. System (1) zur Änderung der Geometrie eines Fahrrads nach Anspruch 12, wobei jede Fassung (32) außerdem mindestens einen Vorsprung (36) umfasst, der in der Trajektorie des Zahns (25) vorgesehen ist, wenn der Chip (2) die obere Position erreicht.

14. Fahrrad, das ein Geometrieänderungssystem (1) nach einem der vorhergehenden Ansprüche umfasst.

15. Verfahren zur Änderung der Geometrie eines Fahrrads, das durch ein System (1) nach einem der Ansprüche 1 bis 13 durchgeführt wird, **dadurch gekennzeichnet, dass** es die folgenden Schritte umfasst:
- Lösen der Schraube (5), ohne sie vollständig herauszuziehen;
- Bewegen der Chips (2) von der Ausgangsposition in die gewünschte Position, indem jeder Körper (22) gegen die Wände (35) des Hohlraums (34) gleitet, ohne die Chips (2) aus ihrer jeweiligen Fassung (32) zu entfernen; und
- Erneutes Anziehen der Schraube (5).

## Revendications

1. Système (1) pour modifier la géométrie d'une bicyclette en modifiant la position d'une connexion d'un mécanisme de suspension arrière
comprenant :
premier et deuxième inserts (2) avec chacun un orifice (21) ;
un premier composant (3) du mécanisme de suspension arrière comprenant une extrémité en forme de fourche, chaque bras (31) de la fourche comprenant une empreinte (32) conçue pour recevoir un insert correspondant (3), le premier bras de la fourche comprenant le premier insert, le deuxième bras de la fourche comprenant le deuxième insert, où lesdits premier et deuxième inserts (32) comprennent chacun un orifice (33).
un deuxième composant (4) du mécanisme de suspension arrière ayant une extrémité comprenant un orifice de connexion (41) et
une vis (5) conçue pour passer par l'orifice (21) du premier insert (2), l'orifice (33) de la première empreinte (32), l'orifice de connexion (41) du deuxième composant (4), l'orifice (33) de la deuxième empreinte (32) et s'engager par filetage dans l'orifice (21) du second insert (2).
où les inserts (2) sont configurés pour s'ajuster dans les empreintes (32) du premier composant (3) de manière alternative dans au moins deux positions différentes, où chaque position correspond à une position différente des orifices (21) des inserts (2) par rapport au premier composant (3),
chaque empreinte (32) du premier composant (3) comprenant une cavité (34) délimitée par des parois (35) prévues autour de l'orifice (33) de ladite empreinte (32) **caractérisé en ce que**
chaque insert (2) comprend un corps (22) où l'orifice (21) est prévu, où chaque corps (22) a une forme configurée pour s'adapter à l'intérieur de ladite cavité (34) de l'insert respectif (32), de telle sorte qu'il passe en alternant entre les deux positions citées au moins en glissant le long des parois (35) sans sortir de la cavité (34),
où chaque cavité (34) n'a pas la même forme que le corps respectif (22) mais est configuré à la manière d'une came avec des parois (35) légèrement courbes, lesdites parois (35) obligeant chaque corps (22) à suivre une translation ou un mouvement combiné de rotation et de translation sur ledit corps (2) se déplaçant d'une position à l'autre.

2. Système (1) pour changer la géométrie d'une bicyclette conformément à la revendication 1, où chaque corps (22) a une forme allongée et chaque cavité (34) a une forme en cœur comprenant deux lobes (34a, 34b) sortant dans les deux sens pour former un angle, de telle sorte que chaque corps (22) s'ajuste alternativement dans un lobe ou l'autre (34a, 34b) respectivement dans une position supérieure ou inférieure, où les parois (35) de chaque cavité (34) sont configurées pour guider les corps entre la position supérieure et la position inférieure suivant une trajectoire combinant la rotation et la translation.

3. Système (1) pour modifier la géométrie d'une bicyclette conformément à la revendication 2, où chaque corps (2) est essentiellement rectangulaire avec des extrémités semi-circulaires et l'orifice (21) est installé près de l'une desdites extrémités, et chaque lobe (34a, 34b) de la cavité (34) de l'empreinte (32) du premier composant (3) a une forme essentiellement semi-circulaire.

4. Système (1) pour modifier la géométrie d'une bicyclette conformément à la revendication 3, où les lobes (34z, 34b) de chaque cavité (34) comprend un lobe haut (34a) et un lobe bas (34b) où lesdits lobes (34a, 34b) sont conçus de telle sorte que l'écart angulaire des corps entre les positions haute et basse est inférieur à 90°.

5. Système (1) pour modifier la géométrie d'une bicyclette conformément à la revendication 4, où l'écart angulaire de chaque corps (22) entre la position haute et la position basse est compris entre 55° et 80°.

6. Système (1) pour modifier la géométrie d'une bicyclette conformément à n'importe laquelle des revendications 4-5 où les axes (E34a, E34b) des lobes (34a, 34b) de chaque cavité (34) forment un angle de 90°, de telle sorte que dans la position basse les corps sont alignés avec l'axe (E34b) du corps inférieur (34b) tandis que dans la position haute, les corps (22) ne sont pas alignés avec l'axe (E34a) du lobe haut (34a).

7. Système (1) pour modifier la géométrie d'une bicyclette conformément à l'une des revendications précédente, où chaque insert (2) comprend ensuite une saillie (23) perpendiculaire à un plan parallèle au corps (22) qui étend au moins partiellement une paroi intérieure de l'orifice (21) de l'insert (2) de telle sorte que lorsque le corps (22) est logé à l'intérieur de la cavité (34) de l'empreinte (22), la saillie (23) passe par l'orifice (33) de ladite empreinte (32) et où la forme de l'orifice (33) est configurée de telle sorte que la saillie (23) glisse le long des bords dudit orifice (33) où l'insert se déplace entre la position haute et la position basse.

8. Système (1) pour modifier la géométrie d'une bicyclette conformément à la revendication 7, où la saillie (23) a une paroi interne circulaire (231) faisant partie d'une surface interne de l'orifice (21) de l'insert (2) et également une paroi extérieure circulaire (232).

9. Système (1) pour modifier la géométrie d'une bicyclette conformément à l'une des revendications 7-8, où l'orifice (33) de chaque empreinte (32) a essentiellement la même forme que la cavité (34) de ladite empreinte (32).

10. Système (1) pour modifier la géométrie d'une bicyclette conformément à l'une des revendications précédentes, où chaque insert (2) comprend par ailleurs une plaque de protection (24) installée sur un côté du corps (22) opposé à celui où la saillie (23) est installée, où la plaque de protection (24) fait saillie radialement par rapport au corps (22) de telle sorte que lorsque l'insert (2) entre dans l'empreinte (32), ladite plaque de protection (24) couvre un bord supérieur des parois (35) de la cavité (34) afin d'empêcher l'entrée des débris.

11. Système (1) pour modifier la géométrie d'une bicyclette conformément à la revendication 10, où chaque insert (2) comprend également un élément indicateur conçu pour fournir à l'utilisateur une indication visuelle de l'orientation du corps (22).

12. Système (1) pour modifier la géométrie d'une bicyclette conformément à la revendication 11, où chaque élément indicateur est une dent (25) faisant saille radialement depuis la plaque de protection.

13. Système (1) pour modifier la géométrie d'une bicyclette conformément à la revendication 12, où chaque empreinte (32) comprend par ailleurs au moins une projection (36) prévue dans la trajectoire de la dent (25) où l'insert (2) atteint la position haute.

14. Bicyclette comprenant un système de changement de géométrie (1) conformément à n'importe laquelle des revendications précédentes.

15. Méthode pour changer la géométrie d'une bicyclette mis en œuvre par un système (1) conformé à l'une des revendications 1-13 **caractérisée par le fait qu'**elle comprend les étapes suivantes :
- dévisser la vis (5) sans l'extraire complètement ;
- déplacer les inserts (2) de la position initiale à la position souhaitée en faisant glisser chaque corps (22) le long des murs (35) de la cavité (34) sans extraire les inserts (2) de leurs empreintes respectives (32) ; et
- revisser la vis (5).
